# EUROPÄISCHE PATENTANMELDUNG

(11) **EP 0 680 182 A2**
(43) Veröffentlichungstag der Anmeldung: **02.11.1995**
(21) Anmeldenummer: 95105878.3
(22) Anmeldetag: 20.04.1995
(51) Int. Cl.: H04L 12/56

(54) **Verfahren und Anordnung zum Betreiben eines Koppelnetzes**

(30) Priorität: 29.04.1994 DE 4415016
(71) Anmelder: Alcatel SEL Aktiengesellschaft, D-70435 Stuttgart (DE)
(72) Erfinder: Pfeiffer, Bodo, D-71701 Schwieberdingen (DE); Wahl, Stefan, D-71701 Schwieberdingen (DE)
(74) Vertreter: Brose, Gerhard

(57) **Zusammenfassung**

Ein Verfahren zum Betreiben eines Koppelnetzes, das von einer Anzahl von Koppelmodulen (SM11 bis SM34) und einem Verbindungsnetz zwischen den Koppelmodulen gebildet wird, ist beschrieben, wobei das Verbindungsnetz eine Schalteinrichtung (SE) enthält und die Koppelmodule (SM11 bis SM34) entsprechend einer logischen Verbindungsstruktur miteinander verbindet, und diese Verbindungsstruktur mittels der Schalteinrichtung (SE) nach Bedarf umkonfiguriert wird.

## Beschreibung

Die Erfindung betrifft ein Verfahren zum Betreiben eines Koppelnetzes nach dem Oberbegriff von Anspruch 1, ein Koppelnetz nach dem Oberbegriff von Anspruch 4 und eine Vermittlungsstelle nach dem Oberbegriff von Anspruch 7.

Die Erfindung geht von einem Koppelnetz aus, wie es in dem Artikel "Switching Network Architecture for ATM Based Broadband Communications" von M.A. Henrion at al auf dem XIII. International Switching Symposium, Juni 1990, Band V, Seiten 1-8, vorgestellt wurde.

In diesem Artikel wird ein dreistufiges Koppelnetz beschrieben, bei dem mehrere Wege für eine Verbindung von einer Eingangs- zu einer Ausgangsleitung möglich sind. Jede Koppelnetzstufe ist aus mehreren Koppelmodulen aufgebaut, wobei ein Koppelmodul ein 128 x 128 Koppelfeld oder ein 32 x 32 Koppelfeld darstellt. Die erste Koppelnetzstufe wird von einer Anzahl parallel geschalteter Koppelmodule gebildet, die Zugangskoppelmodule genannt werden. Sie haben die Aufgabe, den Verkehr gleichmäßig auf die Koppelmodule der nachfolgenden Koppelnetzstufen zu verteilen. Die eigentliche Vermittlungsfunktion wird von den anderen beiden Koppelnetzstufen ausgeführt, die ebenfalls jeweils aus einer Anzahl von parallel geschalteten Koppelmodulen bestehen. Die Koppelmodule der drei Koppelnetzstufen sind über festverdrahtete Verbindungswege miteinander verbunden. Jedes der Koppelmodule verfügt über eine Schaltung zur Fehlererkennung. Stellt diese fest, daß ein Fehler innerhalb des Koppelmoduls auftritt, so sendet sie ein bestimmtes Signal rückwärts zu allen vorangehenden Koppelmodulen. Dieses Signal fordert die vorangehenden Koppelmodule auf, keine Datenzellen mehr an das fehlerhafte Koppelmodul zu senden. Auf diese Weise wird das fehlerhafte Koppelmodul isoliert, so daß die Funktionsfähigkeit des gesamten Koppelnetzes erhalten bleibt.

Der Nachteil dieser Selbst-Isolierung ist, daß bei Ausfall eines Koppelmoduls unter Umständen eine größere Zahl von anderen Koppelmodulen ebenfalls nicht mehr für die Durchführung von Vermittlungsfunktionen zur Verfügung steht. Deshalb ist es notwendig, bei der Dimensionierung des Koppelnetzes auch den Ausfall eines größeren Bereichs von Koppelmodulen mitzuberücksichtigen und das Koppelnetz entsprechend überzudimensionieren.

Es ist nun die Aufgabe der Erfindung, die Funktionsfähigkeit eines Koppelnetzes bei Ausfall oder bei Überlastung von Koppelmodulen sicherzustellen.

Die Aufgabe wird gelöst durch ein Verfahren nach der Lehre von Anspruch 1, durch ein Koppelnetz nach der Lehre von Anspruch 4 und durch eine Vermittlungsstelle nach der Lehre von Anspruch 7.

Der Grundgedanke der Erfindung ist, die Struktur der Verknüpfung der Koppelmodule mittels einer Schalteinrichtung zu verändern. So ist es möglich, das Koppelnetz bei Auftreten eines Fehlers in einem Koppelmodul umzukonfigurieren und so die Auswirkungen des Ausfalls eines Koppelmoduls auf die übrigen Koppelmodule möglichst gering zu halten.

Vorteilhafte Ausgestaltungen der Erfindung sind den Unteransprüchen zu entnehmen.

Die Erfindung hat den Vorteil, daß nicht mehr eine größere Zahl von Koppelmodulen in Reserve gehalten werden muß, sondern nur noch einige wenige Koppelmodule. Es ergibt sich so eine Einsparung in Bezug auf die Anzahl der für ein Koppelnetz benötigten Koppelmodule. Es wird zwar zusätzlich eine Schalteinrichtung benötigt, diese kann jedoch aus recht einfach aufgebauten und damit billigen Koppelpunkten bestehen. Solch ein Koppelpunkt kann z.B. aus einem einfachen elektrischen, oder auch optischen Schalter, beispielsweise einem integrierten optischen Richtungskoppler, bestehen.

Ein weiterer Vorteil der Erfindung ist, daß ein Koppelnetz im Betrieb entsprechend der anliegenden Last oder des anliegenden Lastverhaltens umkonfiguriert werden kann. Auch so ergibt sich eine Einsparung von Koppelmodulen.

Noch ein Vorteil ist, daß ein Koppelnetz per Software entsprechend seiner Verwendung umkonfiguriert werden kann. Diejenige Koppelnetzstruktur, die für ein bestimmtes Lastverhalten, z.B. Video-, Sprach- oder Rechner-Rechner-Kommunikation, am günstigsten ist, unterscheidet sich von Lastverhalten zu Lastverhalten. Bisher mußte so für jedes Lastverhalten ein Koppelnetz mit entsprechenden, festverdrahteten Verbindungsleitungen zwischen den Koppelmodulen aufgebaut werden. Mittels der Erfindung läßt sich diese kostenintensive Hardware-Realisierung umgehen.

Im folgenden wird nun die Erfindung anhand eines Ausführungsbeispiels unter Zuhilfenahme beiliegender Zeichnungen weiter erläutert.

Fig. 1 zeigt ein Blockschaltbild eines erfindungsgemäßen Koppelnetzes.

Fig. 2 zeigt eine symbolische Darstellung der Verbindungsstruktur des Koppelnetzes nach Fig. 1.

Fig. 3 zeigt eine symbolische Darstellung der nach Ausfall eines Koppelmoduls umkonfigurierten Verbindungsstruktur des Koppelnetzes nach Fig. 1.

Im Ausführungsbeispiel wird die Anwendung des erfindungsgemäßen Verfahrens in einem dreistufigen, gestreckten Koppelnetz beschrieben. Es ist jedoch auch möglich, die Erfindung auf ein Koppelnetz mit einer gänzlich anderen Struktur, z.B. einer anderen Zahl von Koppelnetzstufen, mehreren Koppelnetzebenen oder mit einer Umkehrkoppelanordnung (gefaltete Koppelanordnung), anzuwenden.

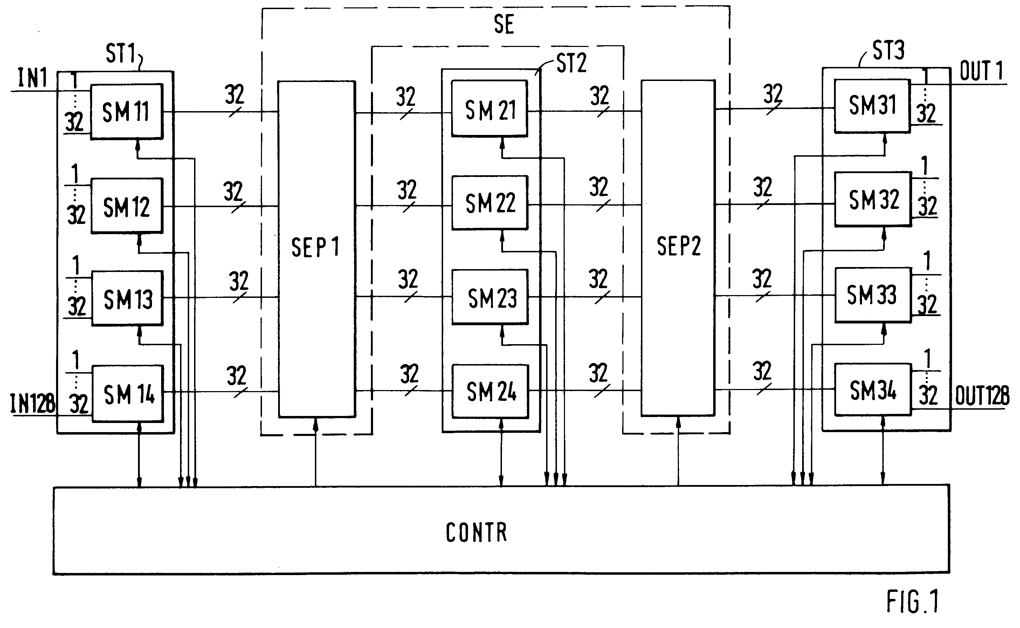

Die Fig. 1 zeigt drei Koppelnetzstufen ST1 bis ST3, eine Schalteinrichtung SE und eine Steuereinrichtung CONTR. Die Koppelnetzstufen ST1 und ST3 sind über die Schalteinrichtung SE mit der Koppelnetzstufe ST2 verbunden. Die Schalteinrichtung SE empfängt Steuerbefehle von der Steuereinrichtung CONTR und die Koppelnetzstufen ST1 bis ST3 tauschen mit der Steuereinrichtung CONTR Daten aus.

Die Koppelnetzstufen ST1 bis ST3 weisen jeweils 128 Eingänge und 128 Ausgänge auf, von denen nur die Eingänge IN1 und IN128 der Koppelnetzstufe ST1 und die Ausgänge OUT1 und OUT128 der Koppelnetzstufe ST3 gezeigt sind.

Das Koppelnetz vermittelt Datenzellen, die an einem der Eingänge IN1 bis IN128 der Koppelnetzstufe ST1 ankommen, auf einen oder auf mehrere der Ausgänge OUT1 bis OUT128 der Koppelnetzstufe ST3. Die Vermittlungsfunktion ist dabei, wie allgemein bei mehrstufigen Koppelnetzen, auf die Koppelnetzstufen ST1 bis ST3 verteilt. Die Verbindungswege zwischen den Koppelnetzstufen ST1 bis ST3 sind über die Schalteinrichtung SE geführt, so daß mit dieser die Verbindungsstruktur zwischen den Koppelnetzstufen ST1 bis ST3 verändert werden kann. Die Verbindungsstruktur ist hierbei die Vorschrift, welche beschreibt, welcher Eingang einer Koppelnetzstufe mit welchem Ausgang der vorhergehenden Koppelnetzstufe verbunden ist. Die Schalteinrichtung SE wird von der Steuereinrichtung CONTR gesteuert, welche mittels dieser die Verbindungsstruktur aufgrund von Daten verändert, die sie von den Koppelnetzstufen ST1 bis ST3 erhält.

Die Koppelnetzstufen ST1 bis ST3 werden von jeweils vier Koppelmodulen gebildet. So weist die Koppelnetzstufe ST1 vier Koppelmodule SM11 bis SM14, die Koppelnetzstufe ST2 vier Koppelmodule SM21 bis SM24 und die Koppelnetzstufe ST3 vier Koppelmodule SM31 bis SM34 auf. Alle Koppelmodule des Koppelnetzes sind gleich aufgebaut. Sie verfügen jeweils über 32 Eingänge und 32 Ausgänge. Die Eingänge der Koppelmodule SM11 bis SM14 bilden die Eingänge IN1 bis IN128 der Koppelnetzstufe ST1. Die Ausgänge der Koppelmodule SM31 bis SM34 bilden die Ausgänge OUT1 bis OUT128 der Koppelnetzstufe ST3.

Es ist auch möglich, Koppelmodule mit einer anderen Anzahl von Einoder Ausgängen zu verwenden oder eine andere Zahl von Koppelmodulen pro Koppelnetzstufe zu verwenden. Darüber hinaus ist es möglich, in verschiedenen Koppelnetzstufen eine unterschiedliche Anzahl von Koppelmodulen oder Koppelmodule mit einer unterschiedlichen Anzahl von Ein- oder Ausgängen zu verwenden.

Die Schalteinrichtung SE besteht aus zwei Teil-Schalteinrichtungen SEP1 und SEP2.

Die jeweils 32 Ausgänge der Koppelmodule SM11 bis SM14 der Koppelnetzstufe ST1 sowie die jeweils 32 Eingänge der Koppelmodule SM21 bis SM24 der Koppelnetzstufe ST2 sind mit der Teil-Schalteinrichtung SEP1 verbunden. Die jeweils 32 Ausgänge der Koppelmodule SM21 bis SM24 der Koppelnetzstufe ST2 sowie die jeweils 32 Eingänge der Koppelmodule SM31 bis SM34 der Koppelnetzstufe ST3 sind mit der Teil-Schalteinrichtung SEP2 verbunden. Jede der Koppelmodule SM11 bis SM14, SM21 bis SM24 und SM31 bis SM34 tauscht Daten mit der Steuereinrichtung CONTR aus. Ebenso erhält jede der beiden Teil-Schalteinrichtungen SEP1 und SEP2 Steuerbefehle von der Steuereinrichtung CONTR.

Die Koppelmodule SM11 bis SM14, SM21 bis SM24 und SM31 bis SM34 sind, wie oben bereits erwähnt, gleich aufgebaut. So wird im weiteren nur beispielhaft die Funktionsweise des Koppelmoduls SM11 beschrieben.

Das Koppelmodul SM11 wird von einer 32x32-ATM-Koppeleinrichtung gebildet. Eine solche Koppeleinrichtung ist z.B. aus dem Artikel "Das ATM-Koppelfeld von Alcatel und seine Eigenschaften" von D. Böttle und M.A. Henrion, Elektrisches Nachrichtenwesen, Bd. 64, Nr. 2-3, 1990, bekannt. Eine solche Koppeleinrichtung kann seinerseits wieder aus mehreren kleineren, miteinander verbundenen Koppeleinrichtungen bestehen.

Das Koppelmodul SM11 vermittelt eine an einem seiner 32 Eingänge ankommende Datenzelle aufgrund von in der Datenzelle enthaltenen Routing-Informationen und einer internen Routing-Tabelle zu einem seiner 32 Ausgänge. Es erhält von der Steuereinrichtung CONTR Steuerbefehle, die eine Veränderung dieser Routing-Tabelle bewirken. So wird bei einer Umkonfigurierung der Verbindungsstruktur sichergestellt, daß die Vermittlungs-Vorschriften in dem Koppelmodul SM11 der neuen Verbindungs-Struktur angepaßt sind. Das Koppelmodul SM11 sendet an die Steuereinrichtung CONTR Daten über seine Verkehrsauslastung sowie Daten, die anzeigen, ob das Koppelmodul SM11 betriebsbereit oder durch einen Fehler gestört ist. Hierfür enthält das Koppelmodul SM11 Einrichtungen, die die Verkehrsauslastung des Koppelmoduls SM11 messen sowie Fehler innerhalb des Koppelmoduls SM11 erkennen und weitermelden.

Es ist auch möglich, daß das Koppelmodul SM11 andere oder weitere Verkehrsparameter an die Steuereinrichtung CONTR sendet. Solche Verkehrsparameter können z.B. die Verkehrsauslastung der einzelnen Eingänge oder Ausgänge des Koppelmoduls SM11 sein. Die Verwendung einer ATM-Koppeleinrichtung für das Koppelmodul SM11 ist nur beispielhaft erfolgt und es kann auch eine beliebige andere Koppeleinrichtung für das Koppelmodul SM11 verwendet werden.

Die Teil-Schalteinrichtungen SEP1 und SEP2 sind gleich aufgebaut. So wird hier im weiteren nur beispielhaft der Aufbau der Teil-Schalteinrichtung SEP1 beschrieben.

Die Teil-Schalteinrichtung SEP1 besteht aus mehreren Koppelpunkten, die es ermöglichen, jeden der Ausgänge der Koppelmodule SM11 bis SM14 der Koppelnetzstufe ST1 auf jeden beliebigen der Eingänge der Koppelmodule SM21 bis SM24 der Koppelnetzstufe PST2 zu schalten. Die Koppelpunkte werden dabei durch Steuerbefehle von der Steuereinrichtung CONTR gesteuert. Solche Koppelpunkte können recht einfach aufgebaut werden, da ihr Schaltverhalten unabhängig von dem zu schaltenden Signal ist. Sie müssen beispielsweise nicht den Taktbeziehungen dieses Signals folgen. Auch können ihre Schaltzeiten über denen der Koppelpunkte der Koppelmodule liegen.

Besonders vorteilhaft ist es, optische Koppelpunkte in der Schalteinrichtung SE einzusetzen und die Koppelmodule über optische Verbindungsleitungen miteinander zu verbinden. Solche Koppelpunkte könnten durch einfache optische Ein-/Ausschalter realisiert werden.

Es ist auch möglich, daß die Teil-Schalteinrichtung SEP1 nicht alle möglichen Verbindungs-Kombinationen zwischen den Eingängen der Koppelnetzstufe ST2 und den Ausgängen der Koppelnetzstufe ST1 ermöglicht. Dies wäre sinnvoll, um die Anzahl der benötigten Koppelpunkte nicht zu groß werden zu lassen. Beispielsweise könnten nur für bestimmte Fehler- oder Überlastungsfälle alternative Verbindungsstrukturen zwischen den Koppelnetzstufen ST1 und ST2 vorgesehen werden und nur die hierfür benötigten schaltbaren Wege durch die Teil-Schalteinrichtung SEP1 bereitgestellt werden.

Es ist weiter möglich, die Schalteinrichtung SE nicht in die beiden Teil-Schalteinrichtungen SEP1 und SEP2 aufzuteilen. Damit wären alle möglichen Verbindungs-Kombinationen zwischen den Koppelmodulen aller drei Koppelnetzstufen ST1 bis ST3 möglich. Vor allem bei Koppelnetzanordnungen mit einer großen Anzahl von Koppelnetzstufen ergibt sich so die Möglichkeit, Koppelmodule durch Veränderung der Verbindungsstruktur abwechselnd unterschiedlichen Koppelnetzstufen zuzuteilen. So könnte z.B. ein Reserve-Koppelmodul in unterschiedlichen Koppelnetzstufen eingesetzt werden, wenn sich dort eine Überlastungs- oder Fehlersituation ergibt. Auch könnte so die Anzahl der Koppelnetzstufen oder Koppelnetzebenen verändert werden.

Die Steuereinrichtung CONTR erhält von den Koppelmodulen SM11 bis SM14, SM21 bis SM24 und SM31 bis SM34 Daten über die Verkehrsauslastung und die Funktionsfähigkeit der einzelnen Koppelmodule. Anhand dieser Daten entscheidet sie, ob die Verbindungsstruktur des Koppelnetzes umkonfiguriert werden soll. Hat sich die Steuereinrichtung CONTR für solch eine Umkonfigurierung entschieden, so berechnet sie die dafür notwendige Änderung der Routing-Tabellen der Koppelmodule SM11 bis SM14, SM21 bis SM24 und SM31 bis SM34 und veranlaßt diese Änderung durch entsprechende Steuerbefehle, die sie an die Koppelmodule SM11 bis SM14, SM21 bis SM24 und SM31 bis SM34 sendet. Daneben sendet sie an die Teil-Schalteinrichtungen SEP1 und SEP2 Steuerbefehle, die ein Umschalten der Koppelpunkte entsprechend der neuen Verbindungsstruktur bewirken.

Es ist auch möglich, daß die Steuereinrichtung CONTR Daten von einer Eingabeeinrichtung erhält. Mittels dieser Eingabeeinrichtung kann dann die Verbindungs-Struktur des Koppelnetzes verändert werden. So könnte z.B. die Verbindungs-Struktur des Koppelnetzes in Abhängigkeit von dem Einsatzgebiet des Koppelnetzes festgelegt werden. Solch ein Einsatzgebiet ist beispielsweise die Verwendung des Koppelnetzes für die Vermittlung des Verkehrs von einem bestimmten Typ von Verkehrsquelle zu einem bestimmten Typ von Verkehrssenke. Damit ist ein flexibles Koppelnetz verfügbar, das per Software umkonfigurierbar ist und so für fast alle Vermittlungsaufgaben eingesetzt werden kann.

Es ist weiter möglich, daß die Steuereinrichtung CONTR eine Umkonfigurierung der Verbindungsstruktur unter der Zielsetzung der Energieeinsparung bewirkt. Dies ist vor allem für die Verwendung eines Koppelnetzes in Kommunikationssatelliten denkbar. Die Steuereinrichtung würde hierfür ein möglichst kleines, für die aktuelle Verkehrsauslastung jedoch ausreichendes Koppelnetz konfigurieren und die nicht benötigten Koppelmodule abschalten.

Es ist weiter möglich, daß die Steuereinrichtung CONTR aus mehreren kleineren Einheiten besteht. Diese Einheiten könnten auch Teile der Schalteinrichtung SE beinhalten.

Im folgenden wird nun das Umkonfigurieren des Koppelnetzes an einem Beispiel kurz erläutert.

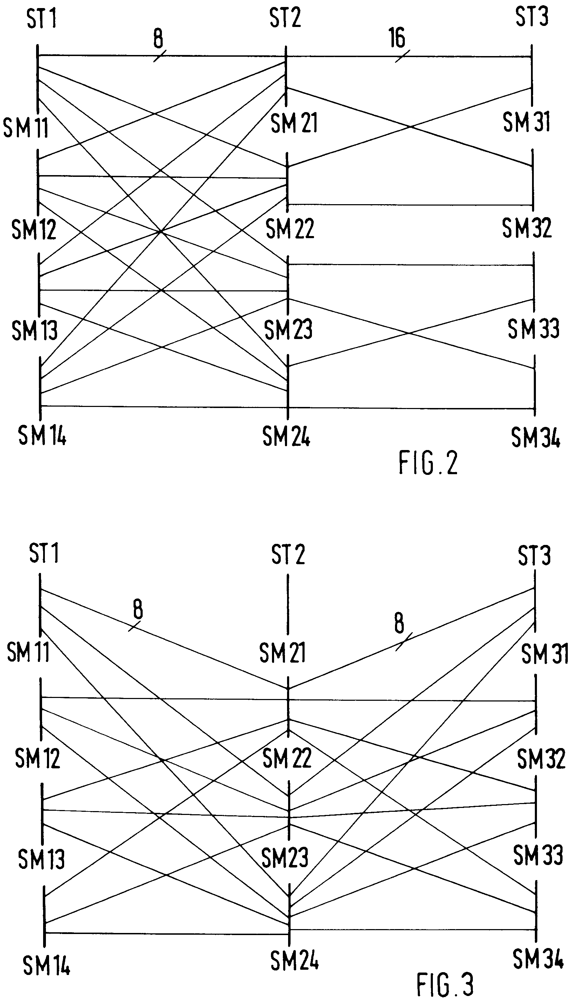

Die Fig. 2 verdeutlicht die (Grund-)Verbindungsstruktur des Koppelnetzes nach Fig. 1. Sie zeigt die Koppelnetzstufen ST1 bis ST3, die von den Koppelmodulen SM11 bis SM14, SM21 bis SM24 bzw. SM31 bis SM34 gebildet werden. Jeweils 8 Ausgänge des Koppelmoduls SM11 sind mit jeweils 8 Eingängen der Koppelmodule SM21 bis SM24 verbunden. Die Ausgänge der Koppelmodule SM12 bis SM14 sind nach dem gleichen Schema mit den Eingängen der Koppelmodule SM21 bis SM24 verbunden. Jeweils 16 Ausgänge der Koppelmodule SM21 und SM22 sind mit jeweils 16 Eingängen der Koppelmodule SM31 und SM32 verbunden. Nach dem gleichen Schema sind jeweils 16 Ausgänge der Koppelmodule SM23 und SM24 mit den Eingängen der Koppelmodule SM33 und SM34 verbunden.

Fällt nun in einem Koppelnetz mit einer derartigen Verbindungsstruktur das Koppelmodul SM21 aus, so sinkt die maximal mögliche Verkehrsauslastung der Koppelmodule SM31 und SM32 um 50 %. Um dies zu vermeiden, entscheidet die Steuereinrichtung CONTR, die Verbindungsstruktur umzukonfigurieren. Als alternative Verbindungsstruktur wählt sie beispielsweise eine Verbindungsstruktur wie sie durch Fig. 3 verdeutlicht wird.

Die Fig. 3 zeigt die Koppelnetzstufen ST1 bis ST3 mit den Koppelmodulen SM11 bis SM14, SM21 bis SM24 bzw. SM31 bis SM34. Jeweils 8 Ausgänge der Koppelmodule SM11 bis SM14 sind mit jedem der Koppelmodule SM22 bis SM24 verbunden. Ebenso sind jeweils 8 Eingänge der Koppelmodule SM31 bis SM38 mit jedem der Koppelmodule SM22 bis SM24 verbunden.

Die Steuereinrichtung CONTR steuert nun die Koppelpunkte der beiden Teil-Schalteinrichtungen SEP1 und SEP2 so an, daß die Verbindungswege zwischen den Koppelnetzstufen ST1 bis ST3 entsprechend dieser neuen Verbindungsstruktur durchgeschaltet werden. Daneben verändert sie die Routing-Tabellen der Koppelmodule SM11 bis SM14, SM22 bis SM24 und SM31 bis SM34 ebenfalls entsprechend der neuen Verbindungsstruktur.

Wird der Steuereinrichtung CONTR die Überlastung der Koppelmodule SM21 oder SM22 gemeldet, weil beispielsweise der Verkehr hauptsächlich von den Eingängen des Koppelmoduls SM11 zu den Ausgängen des Koppelmoduls SM31 vermittelt werden muß, so entscheidet sich die Steuereinrichtung CONTR ebenfalls für eine Umkonfigurierung der Verbindungsstruktur. Eine solche neue Verbindungsstruktur sieht beispielsweise vor, daß anstelle von jeweils 8 Verbindungswegen zwischen dem Koppelmodul SM11 und den Koppelmodulen SM21 und SM22 jeweils 12 Verbindungswege vorgesehen werden. Die neue Verbindungsstruktur sieht so wie folgt aus: Jeweils 12 Ausgänge der Koppelmodule SM11 und SM12 sind mit jeweils 12 Eingängen der Koppelmodule SM21 und SM22 verbunden. Jeweils 4 Ausgänge der Koppelmodule SM11 und SM12 sind mit jeweils 4 Eingängen der Koppelmodule SM23 und SM24 verbunden. Entsprechend sind jeweils 4 Ausgänge der Koppelmodule SM13 und SM14 mit jeweils 4 Eingängen der Koppelmodule SM21 und SM22 und jeweils 12 Ausgängen der Koppelmodule SM13 und SM14 mit jeweils 12 Eingängen der Koppelmodule SM23 und SM24 verbunden. Die Verbindung zwischen den Koppelnetzstufen ST2 und ST3 entspricht der nach Fig. 2.

In dem Ausführungsbeispiel wird die Anwendung des erfindungsgemäßen Verfahrens in einem dreistufigen Koppelnetz beschrieben. Die Erfindung ist jedoch auch für vielstufige Koppelnetze anwendbar. In solchen vielstufigen Koppelnetzen ist es möglich, die Eigenschaften des Koppelnetzes durch die Veränderung der Verbindungs-Struktur der einzelnen Koppelmodule grundlegend zu verändern. So könnte ein Koppelnetz durch die Umkonfigurierung der Verbindungs-Struktur z.B. als Banyan-Netzwertk, als Batcher-Banyan-Netzwerk oder als Sortier-Netzwerk betrieben werden. Es könnte auch eine Mischung dieser Netztypen, beispielsweise ein Sortier- und anschließend ein Banyan-Netzwerk, erzeugt werden. Für alle diese Netztypen wäre so nur eine Hardware notwendig.

## Patentansprüche

1. Verfahren zum Betreiben eines Koppelnetzes, das von einer Anzahl von Koppelmodulen (SM11 bis SM34) und einem Verbindungsnetz zwischen den Koppelmodulen gebildet wird,
**dadurch gekennzeichnet**, daß das Verbindungsnetz eine Schalteinrichtung (SE) enthält und die Koppelmodule (SM11 bis SM34) entsprechend einer logischen Verbindungsstruktur miteinander verbindet, und daß diese Verbindungsstruktur mittels der Schalteinrichtung (SE) nach Bedarf umkonfiguriert wird.

2. Verfahren nach Anspruch 1, dadurch gekennzeichnet, daß die Verbindungsstruktur aufgrund von Daten über den Zustand von Koppelmodulen (SM11 bis SM34) umkonfiguriert wird.

3. Verfahren nach Anspruch 1, dadurch gekennzeichnet, daß die Verbindungsstruktur aufgrund von Daten von einer Eingabeeinrichtung umkonfiguriert wird.

4. Koppelnetz mit einer Anzahl von Koppelmodulen (SM11 bis SM34) und mit einem Verbindungsnetz zwischen den Koppelmodulen,
**dadurch gekennzeichnet**, daß das Verbindungsnetz mit einer Schalteinrichtung (SE) zum Schalten von mehreren Eingangs- auf mehrere Ausgangsleitungen versehen ist, daß mehrere Koppelmodule (SM11 bis SM34) über die Schalteinrichtung (SE) entsprechend einer logischen Verbindungsstruktur miteinander verbunden sind, wobei jedes dieser Koppelmodule (SM11 bis SM34) entweder mit Eingangs- oder mit Ausgangsleitungen der Schalteinrichtung (SE) verbunden ist und daß die Schalteinrichtung (SE) so ausgestaltet ist, daß sie die Verbindungsstruktur nach Bedarf umkonfiguriert.

5. Koppelnetz nach Anspruch 4, dadurch gekennzeichnet, daß die Schalteinrichtung (SE) aus mehreren getrennten Einheiten (SEP1, SEP2) besteht.

6. Koppelnetz nach Anspruch 4, dadurch gekennzeichnet, daß die Schalteinrichtung (SE) optische Schalter zum Schalten von Eingangsauf Ausgangsleitungen enthält.

7. Vermittlungsstelle mit einem Koppelnetz, das mit einer Anzahl von Koppelmodulen (SM11 bis SM34) und mit einem Verbindungsnetz zwischen den Koppelmodulen versehen ist,
**dadurch gekennzeichnet**, daß das Verbindungsnetz mit einer Schalteinrichtung (SE) zum Schalten von mehreren Eingangs- auf mehrere Ausgangsleitungen versehen ist, daß mehrere Koppelmodule (SM11 bis SM34) über die Schalteinrichtung (SE) entsprechend einer logischen Verbindungsstruktur miteinander verbunden sind, wobei jedes dieser Koppelmodule (SM11 bis SM34) entweder mit Eingangs- oder mit Ausgangsleitungen der Schalteinrichtung (SE) verbunden ist und daß die Schalteinrichtung (SE) so ausgestaltet ist, daß sie die Verbindungsstruktur nach Bedarf umkonfiguriert.
